# EUROPÄISCHE PATENTSCHRIFT

(11) **EP 2 046 621 B1**
(45) Veröffentlichungstag und Bekanntmachung des Hinweises auf die Patenterteilung: **28.05.2014**
(21) Anmeldenummer: 07818008.0
(22) Anmeldetag: 18.07.2007
(51) Int. Cl.: B62B 3/18

(54) **EINKAUFSWAGEN**
SHOPPING CART
CHARIOT DE SUPERMARCHÉ

(30) Priorität: 20.07.2006 DE 102006034048
(43) Veröffentlichungstag der Anmeldung: 15.04.2009
(73) Patentinhaber: Wanzl Metallwarenfabrik GmbH, 89336 Leipheim (DE)
(72) Erfinder: ACIKGÖZ, Ayhan, 89312 Günzburg (DE); BLAHA, Marin, 89335 Ichenhausen/Hochwang (DE)
(86) Internationale Anmeldenummer: PCT/EP2007/006385
(87) Internationale Veröffentlichungsnummer: WO 2008/009436

(56) Entgegenhaltungen:
- EP-A- 0 254 210
- DE-A1-102004 031 237
- DE-U1- 20 318 556
- DE-U1- 29 613 568
- DE-U1- 29 717 107

## Beschreibung

Die Erfindung betrifft einen Einkaufswagen mit den Merkmalen im Oberbegriff des Hauptanspruchs.

Einkaufswagen dieser Gattung werden zum Transportieren von Ware, Gepäck oder anderen Gegenständen eingesetzt. Sie finden insbesondere Einsatz in Supermärkten.

Ein solcher Einkaufswagen ist beispielsweise in der deutschen Patentschrift DE 29717107 und EP 0684176 B1 beschrieben. Dieser Einkaufswagen weist insbesondere eine Abstelleinrichtung auf, die von einer Nichtgebrauchslage in eine Gebrauchslage bewegt werden kann.

Aus der europäischen Patentschrift EP 1 208 029 B 1 ist weiterhin ein Haltemittel bekannt, das ein Zurückschwenken der Abstelleinrichtung durch das Eigengewicht der Abstelleinrichtung verhindert. Dieses Haltemittel ist vorzugsweise an einem der Tragarme der Abstelleinrichtung vorgesehen.

Dieses Haltemittel ist jedoch ein Verschleißteil und muss häufig ausgewechselt werden. Wird der Austausch nicht sorgfältig durchgeführt, kommt es vor, dass die Abstelleinrichtung eines Einkaufwagens nicht mehr ordnungsgemäß in ihre Nichtgebrauchslage bewegt wird. Das hat zur Folge, dass die Stapelbarkeit solcher Einkaufwagen nicht mehr gegeben ist.

Auch kommt es vor, dass die Abstelleinrichtung, meist aufgrund von unsachgemäßem Zurückschwenken der Abstelleinrichtung in die Nichtgebrauchslage, verbiegt, was auch ein ordnungsgemäßes Stapeln unmöglich werden lässt.

Oft sind Einkaufwagen mit einem Pfandschloss ausgestattet. Ein solches ist beispielsweise in der deutschen Patentschrift DE 44 26 210 C2 beschrieben. Ein Pfandschloss weist eine Gliederkette auf, die unter Umständen für ein ordnungsgemäßes Ankoppeln von Einkaufwagen mit defekten Haltemitteln für die Abstelleinrichtungen in gestapelter Reihe zu kurz ausgebildet ist.

Die Aufgabe der Erfindung besteht darin, ein verbessertes Haltemittel zu beschreiben.

Die Erfindung löst die Aufgabe mit den Merkmalen im Hauptanspruch.

Durch die Anordnung einer Rastvorrichtung am Gestell und die entsprechende Ausbildung der Abstelleinrichtung selbst für eine Verrasterung der Abstelleinrichtung an der Rastvorrichtung, ist kein Haltemittel für die Gebrauchslage mehr notwendig. Ein Verschleiß kann somit ausgeschlossen werden. Das spart Kosten. Stapelschwierigkeiten treten nicht mehr auf.

Die Erfindung wird anhand eines Ausführungsbeispiels näher erläutert. Es zeigt
- Fig. 1: einen Einkaufswagen mit einer Abstelleinrichtung in Nichtgebrauchslage in Seitenansicht;
- Fig. 2: denselben Einkaufswagen mit einer Abstelleinrichtung in Gebrauchslage in Seitenansicht;
- Fig. 3: denselben Einkaufswagen mit einer Abstelleinrichtung in Nichtgebrauchslage in Vorderansicht;
- Fig. 4: denselben Einkaufswagen mit einer Abstelleinrichtung in Gebrauchslage in Draufsicht sowie
- Fig. 5: denselben Einkaufswagen mit einer Abstelleinrichtung in Gebrauchslage von unten.

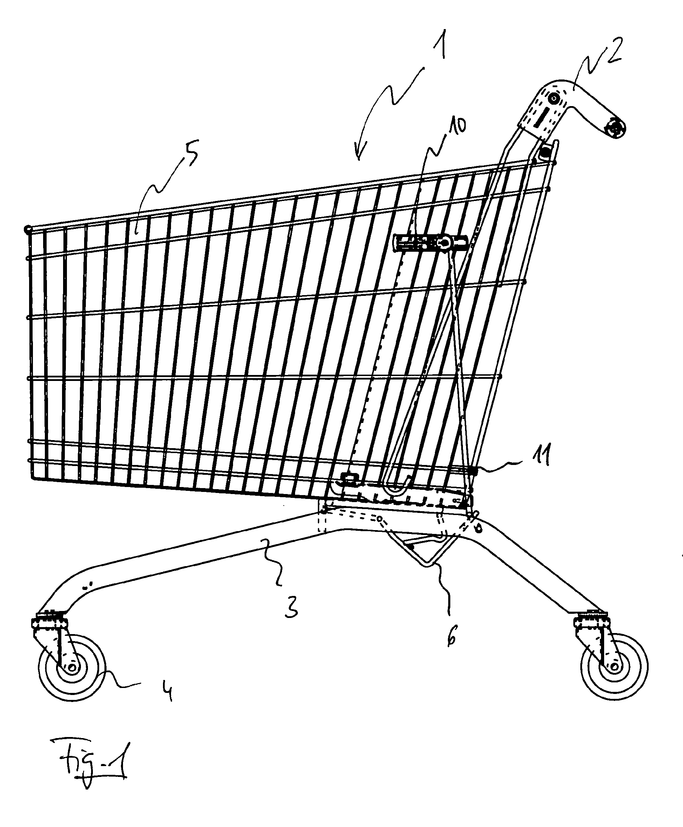

In Fig. 1 ist ein stapelbarer Einkaufswagen 1 mit einer Schiebeeinrichtung 2 und mit einem Fahrgestell 3 dargestellt. Der Wagen 1 weist Rollen 4 auf. Vorzugsweise werden vier Schwenkrollen 4 eingesetzt. Das Fahrgestell 3 trägt einen Korb 5. Jede Abstelleinrichtung 6 ist schwenkbar am Korb 5 mittels zwei Lagerungen 10 gelagert.

Die Abstelleinrichtung 6 ist im hinteren Bereich des Einkaufswagens 1 vorgesehen und ist schwenkbar. Die Abstelleinrichtung 6 kann in eine Gebrauchs- und in eine Nichtgebrauchslage bewegt werden. In Gebrauchslage können Gegenstände, wie beispielsweise so genannte Six-Pack-Gebinde mit 0,5-Liter, 1,0-Liter, 1,5-Liter oder 2,0-Liter Flaschen abgestellt werden.

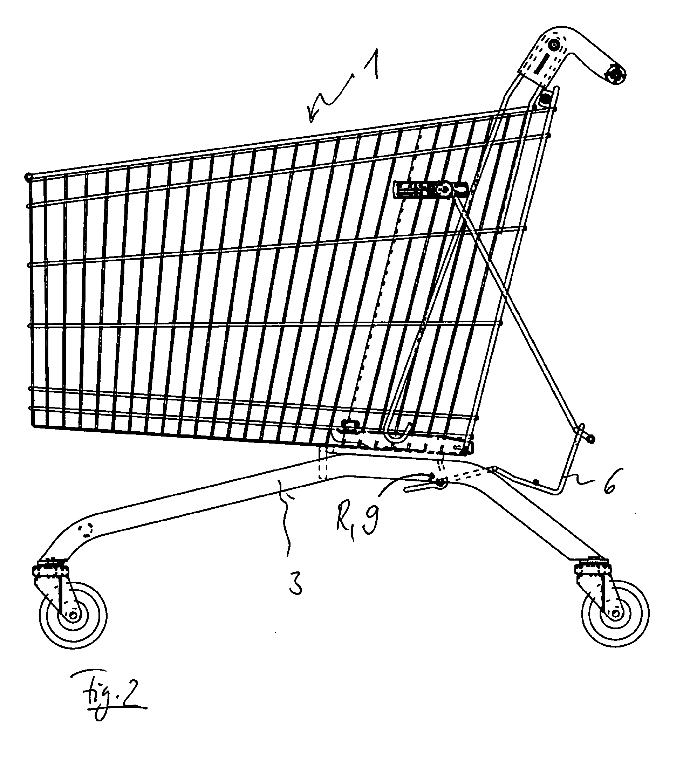

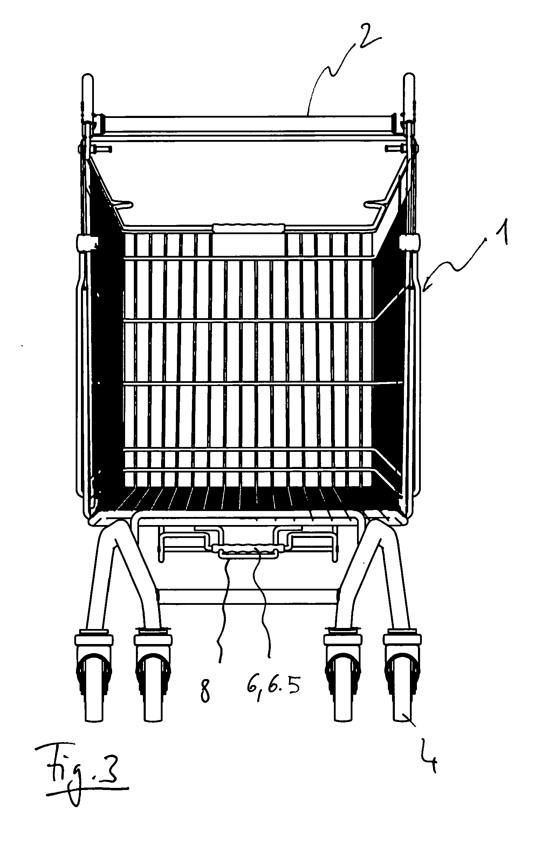

Fig. 1 zeigt die Abstelleinrichtung 6 in Nichtgebrauchslage, Fig. 2 in Gebrauchslage. Ergänzend ist in Fig. 3 eine Abstelleinrichtung 6 in Nichtgebrauchslage in Vorderansicht dargestellt. Die Stapelbarkeit ist trotz Abstelleinrichtung nicht beeinträchtigt, wenn baugleiche Wagen 1 ineinander gestapelt werden.

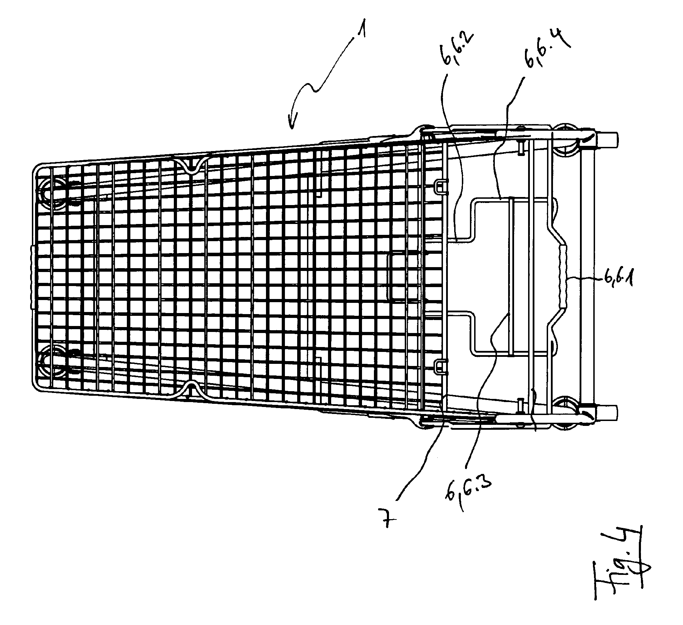

Fig. 4 zeigt denselben Wagen 1 in Draufsicht, wobei die Abstelleinrichtung 6 in Gebrauchslage dargestellt ist.

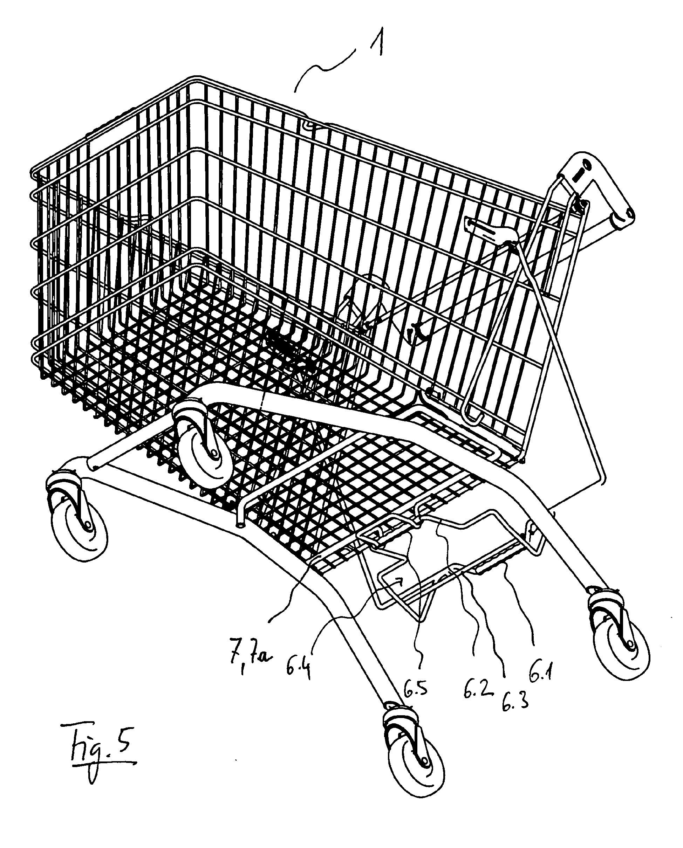

In Gebrauchslage lagert die Abstelleinrichtung 6 in einer Rastvorrichtung 8. Dies ist in Fig. 2 angedeutet und anschaulich in den Fig. 4 und 5 dargestellt. Jedes Gestell 3 weist mindestens eine Querverstrebung 7 auf. Die Querverstrebung 7 kann auf verschiedene Arten gebildet sein. In den beispielhaften Darstellungen ist die Querverstrebung 7 aus Runddraht gebildet und in Form eines "Us" ausgeführt. Die Querversterbung 7 ist je nach Art des Fahrgestells 3 verschieden ausgeführt.

Die Rastvorrichtung 8 ist an einer der Querverstrebungen 7 des Gestells 3 ortsfest angeordnet. Vorzugsweise wird die Rastvorrichtung 8 an der hinteren Querverstrebung 7a vorgesehen.

Die Rastvorrichtung 8 ist in Form eines Rastbügels und vorzugsweise aus Runddraht gebildet. Eine beispielhafte Ausführung zeigen die Figuren 3 und 5. Insbesondere weist die Rastvorrichtung 8 einen Auflage- und Rastbereich 9 auf. Dieser ist vorzugsweise tiefer als die übrige Rastvorrichtung 8 vorgesehen und mit einem Radius R versehen.

Die Form der Abstelleinrichtung 6 ist derart vorgesehen, dass sie in Gebrauchslage in der Rastvorrichtung 8 und insbesondere in dem Auflage-und Rastbereich 9 lagert.

Die Abstelleinrichtung 6 ist ebenfalls aus Runddraht gebildet und weist einen Griff 6.1 auf. An der Stelle des Griffes 6.1 ist der Runddraht mit einer Kunststoffhülse versehen. Weiterhin weist die Abstelleinrichtung 6 einen Rastbereich 6.2 zum Einrasten in die Rastvorrichtung 8 auf. Dieser Bereich 6.2 ist derart ausgebildet, dass ein Einrasten in der Rastvorrichtung 8 gegeben ist. Hierfür ist der Bereich 6.2 vorzugsweise als Lasche ausgebildet. Die Breite ist entsprechend der Breite der Rastvorrichtung 8 zu wählen. Vorzugsweise ist der Bereich 6.2 mit einem Rastmittel 6.5 versehen. Dieses ist vorzugsweise ebenfalls aus einer Kunststoffhülse gebildet. Das bietet zum einen ein einfaches Einrasten in der Rastvorrichtung 8 und weiterhin eine Geräuschverminderung.

Durch die leicht federnde Funktion der Rastvorrichtung 8 ist ein einfaches Einrasten der Abstelleinrichtung 6 in die Rastvorrichtung 8 gegeben.

Weiterhin weist die Abstelleinrichtung 6 eine Ablagevorrichtung 6.3 auf. Diese ist in den Figuren als einzelner runder Querdraht gebildet. Es sind aber auch andere Ablagevorrichtungen 6.3, wie z.B. mehrere Querdrähte oder andere Formen denkbar.

Die Form der Abstelleinrichtung 6, insbesondere die Anordnung des Drahtes, ist vorzugsweise - wie in der Draufsicht, Fig. 4, ersichtlich - rechteckig ausgeführt.

Weiterhin ist die Ablagevorrichtung 6 und hierbei der Aufnahmebereich 6.4, wie in den Figuren 1 und 2 dargestellt, in Form eines nahezu rechten Winkels ausgeführt.

Der Rastbereich 6.2 ist, wie in den Figuren 1 und 2 ersichtlich, nochmals abgewinkelt ausgeführt. Der Winkel des Rastbereichs 6.2 ist entsprechend der Gestalt und Abmessung des Gestells 3 auszuführen.

In Nichtgebrauchslage ist der Rastbereich 6.2 an einer weiteren Querverstrebung 7 gesichert, dies ist in den Figuren nicht näher dargestellt. Die Ablagevorrichtung 6 klappt dadurch nicht selbsttätig in die Gebrauchslage. Die Stapelbarkeit baugleicher Wagen wird dadurch nicht beeinträchtigt. Alternativ hierzu weist der Korb an seiner Unterseite eine Vorrichtung für die Sicherung der Ablagevorrichtung 6 in Nichtgebrauchslage auf.

Auch wäre denkbar, an der Rastvorrichtung 8 eine Vorrichtung zur Sicherung der Ablagevorrichtung 6 in Nichtgebrauchslage vorzusehen.

Fig. 1 zeigt eine weitere Möglichkeit, die Ablagevorrichtung 6 in Nichtgebrauchslage zu sichern. Vorzugsweise ist diese Sicherung 11 ein Kunststoffteil, das am Korb 5 wechselbar angeordnet ist.

Für die Verwendung von kleineren Packungen bietet es sich weiterhin an, Abgrenzungen z.B. durch das Anbringen von weiteren Drähten am Aufnahmebereich 6.4 vorzunehmen.

### Bezugszeichenliste

- 1: Einkaufswagen
- 2: Schiebeeinrichtung
- 3: Fahrgestell, Gestell
- 4: Rollen
- 5: Korb
- 6: Abstelleinrichtung
- 6.1: Griff
- 6.2: Rastbereich
- 6.3: Ablagevorrichtung
- 6.4: Aufnahmebereich
- 6.5: Rastmittel
- 7: Querverstrebung
- 7a: hintere Querverstrebung, weitere Querverstrebung
- 8: Rastvorrichtung
- 9: Auflage-/Rastbereich
- 10: Lagerung Abstelleinrichtung
- 11: Sicherung
- R: Radius

## Patentansprüche

1. Stapelbarer Einkaufswagen mit einer Schiebeeinrichtung (2) und einem Fahrgestell (3) mit Rollen (4), wobei das Fahrgestell (3) mindestens eine Querverstrebung (7) aufweist und einen Korb (5) trägt, und mit einer verschwenkbaren Abstelleinrichtung (6), die im hinteren Bereich des Einkaufswagens (1) angeordnet und am Korb (6) gelagert ist, sowie in eine Gebrauchs- und in eine Nichtgebrauchslage bewegt werden kann, wobei jedes Fahrgestell (3) eine Rastvorrichtung (8) aufweist, **dadurch gekennzeichnet, dass** jede Abstelleinrichtung (6) einen Rastbereich (6.2) aufweist, der als Lasche ausgeführt ist, so dass die Abstelleinrichtung (6) in Gebrauchslage in der Rastvorrichtung (8) verrastet ist, wobei die Rastvorrichtung (8) an einer Querverstrebung (7) des Gestells (3) ortsfest und unterhalb des Korbes (5) angeordnet ist.

2. Stapelbarer Einkaufswagen nach Anspruch 1, **dadurch gekennzeichnet, dass** die Rastvorrichtung (8) in Form eines Rastbügels gebildet ist.

3. Stapelbarer Einkaufswagen nach Anspruch 1, **dadurch gekennzeichnet, dass** die Rastvorrichtung (8) einen Auflage- und Rastbereich (9) aufweist.

4. Stapelbarer Einkaufswagen nach einem der vorhergehenden Ansprüche, **dadurch gekennzeichnet, dass** die Breite der Lasche entsprechend der Breite der Rastvorrichtung (8) gewählt ist.

5. Stapelbarer Einkaufswagen nach einem der vorhergehenden Ansprüche, **dadurch gekennzeichnet, dass** der Rastbereich (6.2) mit einem Rastminel (6.5) versehen ist.

6. Stapelbarer Einkaufswagen nach einem der vorhergehenden Ansprüche, dadurch gekennzeichet, dass der Rastbereich (6.2) abgewinkelt ausgeführt ist.

7. Stapelbarer Einkaufswagen nach einem der vorhergehenden Ansprüche, **dadurch gekennzeichnet, dass** der Rastbereich (6.2) in Nichtgebrauchslage an einer weiteren Querverstrebung (7) gesichert ist.

## Claims

1. A nestable shopping trolley with a pushing means (2) and a wheel frame (3) with rollers (4), wherein the wheel frame (3) has at least one transverse bracing means (7) and bears a basket (5), and with a pivotable deposit means (6) which is arranged in the rear region of the shopping trolley (1) and is mounted on the basket (5), and also can be moved into a use position and into a non-use position, wherein each wheel frame (3) has a latching device (8), **characterised in that** each deposit means (6) has a latching region (6.2) which is embodied as a tab,
so that the deposit means (6) in the use position is latched in the latching device (8), the latching device (8) being arranged stationary and below the basket (5) on a transverse bracing means (7) of the frame (3).

2. A nestable shopping trolley according to Claim 1, **characterised in that** the latching device (8) is in the form of a stirrup-shaped latch member.

3. A nestable shopping trolley according to Claim 1, **characterised in that** the latching device (8) has a support and latching region (9).

4. A nestable shopping trolley according to one of the preceding claims, **characterised in that** the width of the tab is selected corresponding to the width of the latching device (8).

5. A nestable shopping trolley according to one of the preceding claims, **characterised in that** the latching region (6.2) is provided with a latch means (6.5).

6. A nestable shopping trolley according to one of the preceding claims, **characterised in that** the latching region (6.2) is formed angled.

7. A nestable shopping trolley according to one of the preceding claims, **characterised in that** the latching region (6.2) in the non-use position is secured on a further transverse bracing means (7).

## Revendications

1. Chariot à provisions de type imbricable, équipé d'un système de poussée (2) et d'un châssis de roulement (3) comportant des roulettes (4), ledit châssis de roulement (3) présentant au moins un renfort transversal (7) et portant un panier (5), et d'un reposoir (6) apte à pivoter, placé dans la région postérieure dudit chariot à provisions (1), monté sur ledit panier (5) et pouvant être mû vers une position d'utilisation et vers une position de non-utilisation, chaque châssis de roulement (3) étant pourvu d'un dispositif d'encliquetage (8), **caractérisé par le fait que** chaque reposoir (6) présente une zone encliquetable (6.2) réalisée sous la forme d'une patte, de telle sorte que ledit reposoir (6) puisse être cranté dans le dispositif d'encliquetage (8) en position d'utilisation, sachant que ledit dispositif d'encliquetage (8) est implanté de manière fixe sur un renfort transversal (7) du châssis (3), et est situé au-dessous du panier (5).

2. Chariot à provisions de type imbricable selon la revendication 1, **caractérisé par le fait que** le dispositif d'encliquetage (8) revêt la forme d'un étrier d'encliquetage.

3. Chariot à provisions de type imbricable selon la revendication 1, **caractérisé par le fait que** le dispositif d'encliquetage (8) présente une zone (9) d'appui et de crantage.

4. Chariot à provisions de type imbricable selon l'une des revendications précédentes, **caractérisé par le fait que** la largeur de la patte est sélectionnée en correspondance avec la largeur du dispositif d'encliquetage (8).

5. Chariot à provisions de type imbricable selon l'une des revendications précédentes, **caractérisé par le fait que** la zone encliquetable (6.2) est dotée d'un moyen de crantage (6.5).

6. Chariot à provisions de type imbricable selon l'une des revendications précédentes, **caractérisé par le fait que** la zone encliquetable (6.2) est de réalisation coudée.

7. Chariot à provisions de type imbricable selon l'une des revendications précédentes, **caractérisé par le fait que** la zone encliquetable (6.2) est arrêtée sur un renfort transversal supplémentaire (7) en position de non-utilisation.
